# EUROPEAN PATENT APPLICATION

(11) **EP 4 528 160 A1**
(43) Date of publication of application: **26.03.2025**
(21) Application number: 22942792.7
(22) Date of filing: 22.12.2022
(51) Int. Cl.: F23G 5/00, F23G 5/44, F23G 5/50, F23L 7/00, F23C 9/08, F23N 5/00

(54) **WASTE INCINERATION FACILITY**

(30) Priority: 17.05.2022 JP 2022080978
(71) Applicant: Kanadevia Corporation, Osaka-shi, Osaka 559-8559 (JP)
(72) Inventor: FURUBAYASHI, Michitaka, Osaka-shi, Osaka 559-8559 (JP); HARADA, Hiroki, Osaka-shi, Osaka 559-8559 (JP); YASUI, Yutaka, Osaka-shi, Osaka 559-8559 (JP); UEDA, Masaki, Osaka-shi, Osaka 559-8559 (JP); TOMIYAMA, Shigeo, Osaka-shi, Osaka 559-8559 (JP); NAGAMORI, Toshio, Osaka-shi, Osaka 559-8559 (JP)
(74) Representative: Grünecker Patent- und Rechtsanwälte PartG mbB
(86) International application number: PCT/JP2022/047405
(87) International publication number: WO 2023/223591

(57) **Abstract**

A waste incineration plant (1) includes a recirculating flue gas line (6) through which part of a flue gas flowing through a flue gas passage (4) is taken out as a recirculating flue gas and supplied into an incinerator (3); an oxygen mixer (5) that mixes the recirculating flue gas flowing through the recirculating flue gas line (6) with a high-concentration oxygen gas that has a higher oxygen concentration than air; a mixture-ratio changer (81 to 83) that changes a mixture ratio of the recirculating flue gas and the high-concentration oxygen gas that are supplied into the incinerator (3) from a predetermined gas supply position in the incinerator (3); an amount-of-interest measuring part (36 to 38) that measures, as the amount of interest, at least one of the amount of steam produced by heat of the flue gas, the temperature inside the incinerator (3), or the oxygen concentration at the outlet of the incinerator (3); and a controller (10) that controls the mixture-ratio changer (81 to 83) to approximate a measured value of the amount of interest to a predetermined target value. The recirculating flue gas mixed with the high-concentration oxygen gas is a main gas of a gas for combustion supplied into the incinerator (3) through a gas pipe.

## Description

### TECHNICAL FIELD

The present invention relates to a waste incineration plant.

### [CROSS-REFERENCE TO RELATED APPLICATIONS]

This application claims priority benefit of Japanese Patent Application No. JP2022-80978 filed in the Japan Patent Office on May 17, 2022, the entire disclosure of which is incorporated herein by reference.

### BACKGROUND ART

Waste incineration plants have conventionally taken out part of a flue gas flowing through a flue gas passage as a recirculating flue gas to supply the recirculating flue gas into an incinerator. Use of the recirculating flue gas enables reducing the amount of the flue gas discharged from the waste incineration plants. The incineration plant disclosed in Japanese Patent Application Laid-Open No. 2021-71238 (Document 1) includes a wind box for combustion control gas that is provided below a combustion stoker in a slow combustion zone and that is connected to a low oxygen-gas supply pipe for supplying a low oxygen gas and a high oxygen-gas supply pipe for supplying a high oxygen gas. As a source of the low oxygen gas, a flue-gas reflux system is used, and the oxygen concentration in high oxygen gas is set to 21% to 30% by volume. When the amount of main steam is less than a target amount of steam, a gas that contains the high oxygen gas is supplied to the wind box for combustion control gas. When the amount of main steam is greater than or equal to the target amount of steam, the low oxygen gas is supplied to the wind box for combustion control gas.

Japanese Patent No. 4359536 (Document 2) discloses combustion equipment that incinerates a fuel layer provided on a stoker by air for primary combustion or the like coming from below the fuel layer. This equipment includes a recirculating-flue-gas supply passage that recirculates a flue gas issued from an incinerator into the incinerator, an oxygen supply device, a first oxygen supply passage through which oxygen is supplied from the oxygen supply device to the air for primary combustion, a third oxygen supply passage through which oxygen is supplied from the oxygen supply device to the recirculating flue gas, a changeover device that changes over the supply of oxygen from the oxygen supply device between through the first oxygen supply passage and through the third oxygen supply passage, and a control device that controls the changeover device in accordance with the result of measuring the temperature inside the incinerator and/or the oxygen concentration at the outlet of the incinerator.

As described above, according to Documents 1 and 2, control is performed so as to approximate the amount of interest to a targe value, the amount of interest being the amount of steam, the temperature inside the incinerator, or the oxygen concentration at the outlet of the incinerator. However, there is a limit to the reduction in the amount of flue gas because the air for primary combustion is supplied into the incinerator, i.e., air serves as the main gas of the gas for combustion supplied into the incinerator. There is thus demand for a technique capable of approximating the amount of interest to the target value while considerably reducing the amount of flue gas.

### SUMMARY OF THE INVENTION

The present invention is intended for a waste incineration plant, and it is an object of the present invention to approximate the amount of interest to a target value while considerably reducing the amount of flue gas.

A first aspect of the present invention is a waste incineration plant that includes an incinerator that incinerates waste, a flue gas passage through which a flue gas discharged from the incinerator flows, a dust collector provided in the flue gas passage, a recirculating flue gas line that is connected to a discharge position located downstream of the dust collector in the flue gas passage and that takes out, as a recirculating flue gas, part of the flue gas flowing through the flue gas passage to supply the recirculating flue gas into the incinerator, an oxygen mixer that mixes the recirculating flue gas flowing through the recirculating flue gas line with a high-concentration oxygen gas that has a higher oxygen concentration than air, a mixture-ratio changer that changes a mixture ratio of the recirculating flue gas and the high-concentration oxygen gas that are supplied into the incinerator from a predetermined gas supply position in the incinerator, an amount-of-interest measuring part that measures, as an amount of interest, at least one of an amount of steam produced by heat of the flue gas, a temperature inside the incinerator, or an oxygen concentration at an outlet of the incinerator, and a controller that controls the mixture-ratio changer to approximate a measured value of the amount of interest to a predetermined target value. A main gas of a gas for combustion supplied into the incinerator through a gas pipe is the recirculating flue gas mixed with the high-concentration oxygen gas.

According to the present invention, it is possible to approximate the amount of interest to the target value while considerably reducing the amount of flue gas.

A second aspect of the present invention is the waste incineration plant according to the first aspect that further includes a waste pit that reserves waste before disposal into the incinerator, and a drawn-off gas line through which a gas in the waste pit is drawn off as a drawn-off gas. The oxygen mixer generates the high-concentration oxygen gas from the drawn-off gas and mixes the high-concentration oxygen gas with the recirculating flue gas flowing through the recirculating flue gas line.

A third aspect of the present invention is the waste incineration plant according to the first aspect (or the first or second aspect) that further includes a carbon dioxide collector that is provided downstream of the discharge position in the flue gas passage and that collects carbon dioxide from the flue gas. The oxygen mixer generates the high-concentration oxygen gas from the flue gas that has passed through the carbon dioxide collector and mixes the high-concentration oxygen gas with the recirculating flue gas flowing through the recirculating flue gas line.

A fourth aspect of the present invention is the waste incineration plant according to the first aspect (or any one of the first to third aspects), in which a flow rate of the gas supplied into the incinerator from the gas supply position in the incinerator is approximately constant.

A fifth aspect of the present invention is the waste incineration plant according to any one of the first to fourth aspects, in which the amount of interest includes the amount of steam, and the gas supply position in the incinerator is located below a grate.

A sixth aspect of the present invention is the waste incineration plant according to any one of the first to fourth aspects (or any one of the first to fifth aspects), in which the amount of interest includes the temperature inside the incinerator, and the gas supply position in the incinerator is located at a ceiling portion that covers part of a grate, a side wall portion that surrounds a primary combustion chamber of the incinerator, or a side wall portion that surrounds a secondary combustion chamber of the incinerator.

A seventh aspect of the present invention is the waste incineration plant according to any one of the first to fourth aspects (or any one of the first to sixth aspects), in which the amount of interest includes the oxygen concentration at the outlet of the incinerator, and the gas supply position in the incinerator is located at a side wall portion that surrounds a secondary combustion chamber of the incinerator.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a block diagram showing a configuration of a garbage incineration plant according to a first embodiment.
Fig. 2 is a diagram showing configurations of a garbage pit and an incinerator.
Fig. 3 is a diagram showing another example of a configuration for supplying a gas for primary combustion to grates.
Fig. 4 is a block diagram showing a configuration of a garbage incineration plant according to a second embodiment.
Fig. 5 is a block diagram showing another example of the garbage incineration plant.
Fig. 6 is a block diagram showing a configuration of a garbage incineration plant according to a third embodiment.
Fig. 7 is a block diagram showing another example of the garbage incineration plant.
Fig. 8 is a block diagram showing a configuration of a garbage incineration plant according to a fourth embodiment.

### DESCRIPTION OF EMBODIMENTS

### First Embodiment

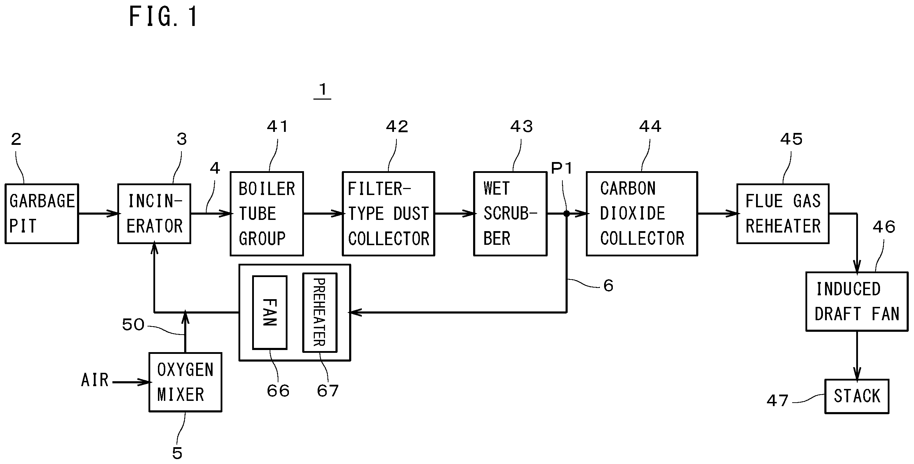

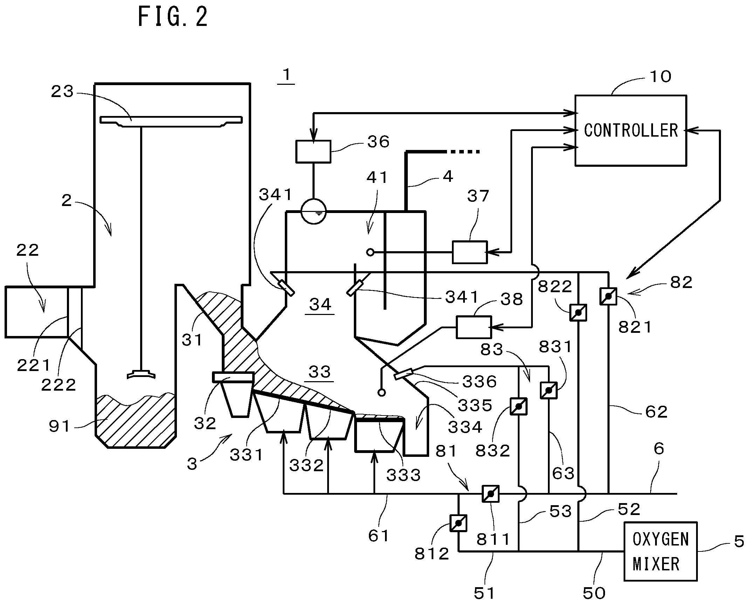

Fig. 1 is a block diagram showing a configuration of a garbage incineration plant 1 according to a first embodiment of the present invention. The garbage incineration plant 1 is a waste incineration plant and includes a garbage pit 2, an incinerator 3, a flue gas passage 4, and a controller 10 (see Fig. 2 described later). The controller 10 may, for example, be a computer that includes a CPU and so on and performs overall control of the garbage incineration plant 1. The garbage pit 2 is a waste pit and reserves garbage serving as waste. The incinerator 3 incinerates garbage that is disposed of from the garbage pit 2. The flue gas passage 4 is a flue through which a flue gas discharged from the incinerator 3 flows. In the example shown in Fig. 1, the flue gas passage 4 is a passage that extends from the incinerator 3 to a stack 47 which will be described later. In Fig. 1, the reference sign 4 is only given to the arrow between the incinerator 3 and a boiler tube group 41 which will be described later. Details on the garbage pit 2 and the incinerator 3 will be described later.

The garbage incineration plant 1 further includes the boiler tube group 41, a filter-type dust collector 42 (hereinafter, simply referred to as the "dust collector 42"), a wet scrubber 43, a carbon dioxide collector 44, a flue gas reheater 45, an induced draft fan 46, and the stack 47. The boiler tube group 41, the dust collector 42, the wet scrubber 43, the carbon dioxide collector 44, the flue gas reheater 45, the induced draft fan 46, and the stack 47 are provided in the flue gas passage 4 and arranged in this order from the upstream side to the downstream side in the direction of flow of the flue gas (i.e., in order from the incinerator 3 toward the stack 47).

The boiler tube group 41 generates steam by using the flue gas discharged from the incinerator 3 as a heat source. The dust collector 42 is a so-called bag filter and collects fly ash contained in the flue gas on a filter cloth. Alternatively, a powder agent for flue gas treatment may be supplied to the flue gas on the upstream side of the dust collector 42 and collected together with fly ash by the dust collector 42. The power agent for flue gas treatment is used to remove substances such as sulfur oxides, hydrogen chloride, dioxins, or mercury compounds. The temperature of the flue gas at the outlet of the dust collector 42 may be in the range of, for example, 150°C to 200°C. The flue gas that has passed through the dust collector 42 flows into the wet scrubber 43.

The wet scrubber 43 may, for example, spray a liquid that contains water and an alkaline agent such as caustic soda into the flue gas. This lowers the temperature of the flue gas to a temperature of, for example, 30°C to 70°C and removes substances such as sulfur oxides or hydrogen chloride contained in the flue gas. The wet scrubber 43 serves as a desulfurizer that removes sulfur oxides contained in the flue gas, and also serves as a dechlorinator that removes hydrogen chlorides contained in the flue gas.

The carbon dioxide collector 44 collects carbon dioxide from the flue gas that has passed through the wet scrubber 43. One example of the carbon dioxide collector 44 is a device that collects carbon dioxide by a chemical absorption method and that includes an absorption tower and a regeneration tower. For example, the absorption tower may spray a liquid that contains amine and water into the flue gas to absorb carbon dioxide into the liquid. That is, carbon dioxide is removed from the flue gas. The liquid that has absorbed carbon dioxide is transmitted to and heated by the regeneration tower in order to take out and collect carbon dioxide. For example, the collected carbon dioxide may be used to generate methane by methanation, or may be reserved in the ground or the like (carbon dioxide capture, utilization, and storage: CCUS). The garbage incineration plant 1 that includes a recirculating flue gas line 6, which will be described later, can easily achieve CCUS because the flue gas has a high carbon dioxide concentration. Alternatively, the carbon dioxide collector 44 may be a device that collects carbon dioxide by a different method other than the chemical absorption method.

As described above, the wet scrubber 43 and the carbon dioxide collector 44 supply a liquid that contains water to the flue gas that has passed through the dust collector 42, and remove a predetermined component from the flue gas. The flue gas that has passed through the wet scrubber 43 and the carbon dioxide collector 44 is a gas that contains large amounts of water, oxygen, and nitrogen.

The flue gas reheater 45 may, for example, heat the flue gas by using steam released from a boiler (boiler tube group 1) as a heating medium. The induced draft fan 46 forms the flow of gas from the upstream side to the downstream side in the flue gas passage 4 (i.e., the flow of gas from the incinerator 3 toward the stack 47). The flue gas that has passed through the induced draft fan 46 is discharged from the stack 47 to the outside. The garbage incineration plant 1 may include, for example, a reducing agent supplier that issues a reducing agent such as ammonia water into the incinerator 3 so as to conduct a selective non-catalytic reduction process (SNCR).

The garbage incineration plant 1 further includes the recirculating flue gas line 6, a fan 66, a preheater 67, and an oxygen mixer 5. The recirculating flue gas line 6 is a passage through which a recirculating flue gas described later flows, and one end of the recirculating flue gas line 6 is connected to a discharge position P1 that is located downstream of the dust collector 42 in the flue gas passage 4. In the example shown in Fig. 1, the discharge position P1 is a position located between the wet scrubber 43 and the carbon dioxide collector 44. The recirculating flue gas line 6 allows part of the flue gas flowing through the flue gas passage 4 to be taken out as a recirculating flue gas. Since, as described previously, the carbon dioxide collector 44 is provided downstream of the discharge position P1 in the flue gas passage 4, the recirculating flue gas taken out at the discharge position P1 has a high carbon dioxide concentration and a low oxygen concentration. The other end of the recirculating flue gas line 6 is connected to the incinerator 3 so that the recirculating flue gas is supplied into the incinerator 3. In Fig. 1, the reference sign 6 is only given to the arrow connected to the discharge position P1. Depending on the design of the garbage incineration plant 1, the discharge position P1 may be located between the dust collector 42 and the wet scrubber 43, or may be located downstream of the carbon dioxide collector 44.

The fan 66 and the preheater 67 are provided in the recirculating flue gas line 6. In one example of the garbage incineration plant 1, the preheater 67 and the fan 66 are arranged in this order from the upstream side to the downstream side along the flow of the recirculating flue gas (i.e., in the direction away from the discharge position P1). Alternatively, two preheaters (first and second preheaters) may be used, and the first preheater, the fan 66, and the second preheater may be arranged in this order from the upstream side to the downstream side. The order in which the fan 66 and the preheater 67 are arranged in the recirculating flue gas line 6 may be determined arbitrarily.

The fan 66 forms a flow of the recirculating flue gas from the upstream side to the downstream side in the recirculating flue gas line 6. The preheater 67 is capable of, for example, heating the recirculating flue gas by using steam released from a boiler (boiler tube group 41) as a heating medium. The preheater 67 may be configured to heat the recirculating flue gas when only necessary.

The oxygen mixer 5 is a device that generates a high-concentration oxygen gas having a higher oxygen concentration (volume concentration) than air from the air and may, for example, be a PSA oxygen-gas generator. The oxygen mixer 5 is connected to the recirculating flue gas line 6 through an oxygen gas mixture line 50 so that the high-concentration oxygen gas generated by the oxygen mixer 5 is mixed with the recirculating flue gas flowing through the recirculating flue gas line 6. In one example of the case where the first preheater, the fan 66, and the second preheater are provided, the high-concentration oxygen gas may be mixed at any point between the fan 66 and the second preheater. The order of arrangement of the first preheater, the fan 66, and the second preheater and the position at which the high-concentration oxygen gas is mixed may be determined arbitrarily. By the mixture with the high-concentration oxygen gas, the recirculating flue gas having a higher oxygen concentration than the flue gas at the discharge position P1 is obtained and supplied into the incinerator 3. The oxygen concentration of the high-concentration oxygen gas is sufficiently higher than air. For example, the oxygen concentration may be higher than or equal to 50% by volume, preferably higher than or equal to 65% by volume, and more preferably higher than or equal to 80% by volume. As will be described later, the high-concentration oxygen gas may be generated from a different substance other than air.

Fig. 2 is a diagram showing configurations of the garbage pit 2 and the incinerator 3. As described previously, the garbage pit 2 reserves garbage before disposal into the incinerator 3 and has an accumulated layer 91 of the garbage formed therein. In the preferable garbage incineration plant 1, the garbage pit 2 is connected to a platform 22 that has a double door structure. Specifically, the platform 22 at which a garbage truck stops includes an outside door 221 and an inside door 222 provided between the garbage pit 2 and the platform 22. When garbage is disposed of from the garbage truck into the garbage pit 2, the outside door 221 is opened with the inside door 222 closed, so as to allow the garbage to be disposed of from the garbage truck. The garbage is temperately reserved between the inside door 222 and the outside door 221. After the garbage has been disposed of from the garbage truck, the outside door 221 is closed and then the inside door 222 is opened. In this way, the garbage is disposed of into the garbage pit 2. After the garbage has been disposed of into the garbage pit 2, the inside door 222 is closed. The aforementioned double-door structure allows a reduction in the amount of air flowing into the garbage pit 2.

The incinerator 3 includes a feed hopper 31, a garbage supplier 32, a primary combustion chamber 33, and a secondary combustion chamber 34. The feed hopper 31 receives the garbage that is disposed of from the garbage pit 2 by a garbage crane 23. The garbage supplier 32 may include, for example, a pusher or a screw feeder and supply garbage from the bottom of the feed hopper 31 into the primary combustion chamber 33.

The primary combustion chamber 33 includes a dry grate 331, a combustion grate 332, a post-combustion grate 333, and an exhaust port 334 that are aligned at the bottom in this order in a direction away from the garbage supplier 32. In the dry grate 331, the combustion grate 332, and the post-combustion grate 333, the garbage is transported from the side of the garbage supplier 32 toward the exhaust port 334 by a common transport operation. In each of the dry grate 331, the combustion grate 332, and the post-combustion grate 333, a gas for primary combustion described later is issued toward the inside of the primary combustion chamber 33 so as to burn the garbage that is under transport. The burnt garbage (mainly, ash) is discharged via the exhaust port 334 to the outside of the primary combustion chamber 33. A ceiling portion 335 that covers above the post-combustion grate 333 is provided with at least one nozzle 336. An auxiliary gas described later is issued from the nozzle 336 toward the inside of the primary combustion chamber 33. The auxiliary gas agitates the gas inside the primary combustion chamber 33. Note that the nozzle 336 may be provided in, for example, a side wall portion (including a posterior wall in the vicinity of the exhaust port 334) that surrounds the primary combustion chamber 33.

The secondary combustion chamber 34 is a space surrounded by a side wall portion and is continuous directly from the primary combustion chamber 33 so as to form a passage of the flue gas discharged from the primary combustion chamber 33. In the example shown in Fig. 2, the secondary combustion chamber 34 is a space that expands upward and that has a passage area sufficiently smaller than the floor area of the primary combustion chamber 33. The side wall portion of the secondary combustion chamber 34 is provided with a plurality of nozzles 341 from which a gas for secondary combustion described later is issued. This helps burning an unburnt gas generated in the primary combustion chamber 33. The secondary combustion chamber 34 is part of the incinerator 3, and a downstream passage from the outlet of the secondary combustion chamber 34 serves as the flue gas passage 4 described previously. In Fig. 2, the reference sign 41 is given to an area where the boiler tube group 41 is provided.

In the example shown in Fig. 2, the recirculating flue gas line 6 branches off into a first branch line 61, a second branch line 62, and a third branch line 63. The first branch line 61 branches off into a plurality of lines that are connected respectively to wind boxes of the dry grate 331, the combustion grate 332, and the post-combustion grate 333. The second branch line 62 branches off into a plurality of lines that are connected respectively to the plurality of nozzles 341. The third branch line 63 is connected to the nozzle 336 of the ceiling portion 335. The first branch line 61, the second branch line 62, and the third branch line 63 are provided with dampers 811, 821, and 831, respectively. The dampers 811, 821, and 831 are electrically connected to the controller 10. The flow rates of the recirculating flue gas flowing through the branch lines 61 to 63 are adjustable by the dampers 811, 821, and 831. In order to accurately adjust the flow rate of the recirculating flue gas, a flowmeter or the like may be provided (the same applies to branch lines 51 to 53 which will be described later).

The oxygen gas mixture line 50 branches off into the first branch line 51, the second branch line 52, and the third branch line 53. The first branch line 51, the second branch line 52, and the third branch line 53 are connected respectively to the first branch line 61, the second branch line 62, and the third branch line 63 of the recirculating flue gas line 6. The first branch line 51, the second branch line 52, and the third branch line 53 are provided with dampers 812, 822, and 832, respectively. The dampers 812, 822, and 832 are electrically connected to the controller 10. The flow rates of the high-concentration oxygen gas flowing through the branch lines 51 to 53 are adjustable by the dampers 812, 822, and 832.

A mixed gas of the recirculating flue gas flowing through the first branch line 61 and the high-concentration oxygen gas flowing through the first branch line 51 is supplied as the gas for primary combustion into the primary combustion chamber 33. The gas for primary combustion is a gas that contains oxygen and that is used for combustion of the garbage in the primary combustion chamber 33. A gas supply position at which the gas for primary combustion is supplied is located below the dry grate 331, the combustion grate 332, and the post-combustion grate 333 (hereinafter, also collectively referred to as the "grates 331 to 333"). The dampers 811 and 812 provided in the first branch lines 51 and 61 serve as a mixture-ratio changer 81 that changes the mixture ratio of the high-concentration oxygen gas and the recirculating flue gas in the gas for primary combustion. **In** the first branch line 61, the damper 811 is provided upstream of the position of connection with the first branch line 51 (the same applies to the damper 821 of the second branch line 62 and the damper 831 of the third branch line 63).

A mixed gas of the recirculating flue gas flowing through the second branch line 62 and the high-concentration oxygen gas flowing through the second branch line 52 is supplied as the gas for secondary combustion into the secondary combustion chamber 34. The gas for secondary combustion is a gas that contains oxygen and that is used for combustion of the unburnt gas in the secondary combustion chamber 34. A gas supply position at which the gas for secondary combustion is supplied is located at each nozzle 341 of the side wall portion. The dampers 821 and 822 provided in the second branch lines 52 and 62 serve as a mixture-ratio changer 82 that changes the mixture ratio of the high-concentration oxygen gas and the recirculating flue gas in the gas for secondary combustion.

A mixed gas of the recirculating flue gas flowing through the third branch line 63 and the high-concentration oxygen gas flowing through the third branch line 53 is supplied as an auxiliary gas into the primary combustion chamber 33. The auxiliary gas is a gas that contains oxygen and that is used for agitation of the gas or for combustion of the unburnt gas in the primary combustion chamber 33. In the example shown in Fig. 2, a gas supply position at which the auxiliary gas is supplied is located at the nozzle 336 of the ceiling portion 335. The dampers 831 and 832 provided in the third branch lines 53 and 63 serve as mixture-ratio changer 83 that changes the mixture ratio of the high-concentration oxygen gas and the recirculating flue gas in the auxiliary gas.

The garbage incineration plant 1 further includes an amount-of-steam measuring part 36, an oxygen-concentration measuring part 37, and an in-incinerator temperature measuring part 38. The amount-of-steam measuring part 36 measures the amount of steam issued from the boiler tube group 41 (hereinafter, also referred to as the "amount of boiler-generated steam"). The steam may be used for, for example, power generation. The oxygen-concentration measuring part 37 uses a sensor provided at the outlet of the secondary combustion chamber 34, i.e., at the outlet of the incinerator 3, to measure the oxygen concentration at the outlet (hereinafter, referred to as the "incinerator-outlet oxygen concentration"). The in-incinerator temperature measuring part 38 measures the temperature inside the primary combustion chamber 33 by using a sensor provided in the primary combustion chamber 33. As will be described later, the in-incinerator temperature measuring part 38 may measure the temperature inside the secondary combustion chamber 34. The amount-of-steam measuring part 36, the oxygen-concentration measuring part 37, and the in-incinerator temperature measuring part 38 are electrically connected to the controller 10.

The controller 10 performs control based on the measured value of the amount of interest, the amount of interest being, for example, the amount of boiler-generated steam measured by the amount-of-steam measuring part 36, the incinerator-outlet oxygen concentration measured by the oxygen-concentration measuring part 37, or the temperature inside the primary combustion chamber 33 (or the temperature inside the secondary combustion chamber 34) measured by the in-incinerator temperature measuring part 38. The amount-of-steam measuring part 36, the oxygen-concentration measuring part 37, and the in-incinerator temperature measuring part 38 serve as the amount-of-interest measuring part that measures the amount of interest.

In a first control example of the controller 10, a target value is set for the amount of boiler-generated steam serving as the amount of interest, and the mixture-ratio changer 81 provided in the first branch lines 51 and 61 is controlled so as to approximate the measured value of the amount of boiler-generated steam, obtained by the amount-of-steam measuring part 36, to the target value. Specifically, when the measured value of the amount of boiler-generated steam is smaller than the target value, the degree of opening of the damper 811 is reduced (from the immediately preceding degree of opening) and the degree of opening of the damper 812 is increased in the mixture-ratio changer 81. This increases the ratio of the high-concentration oxygen gas in the mixed gas of the recirculating flue gas and the high-concentration oxygen gas and allows the gas for primary combustion having a high oxygen concentration (higher than the immediately preceding oxygen concentration) to be supplied from below the grates 331 to 333 into the primary combustion chamber 33. As a result, the measured value of the amount of boiler-generated steam becomes high.

When the amount of boiler-generated steam is higher than the target value, the degree of opening of the damper 811 is increased and the degree of opening of the damper 812 is reduced in the mixture-ratio changer 81. This lowers the ratio of the high-concentration oxygen gas in the mixed gas and allows the gas for primary combustion having a low oxygen concentration to be supplied from below the grates 331 to 333 into the primary combustion chamber 33. As a result, the measured value of the amount of boiler-generated steam becomes low.

As described above, the mixture-ratio changer 81 changes the mixture ratio of the recirculating flue gas and the high-concentration oxygen gas in the mixed gas (i.e., the oxygen concentration in the gas for primary combustion) so as to control the amount of boiler-generated steam to be approximately constant at the target value. The oxygen concentration in the gas for primary combustion (and in the gas for secondary combustion and the auxiliary gas) may, for example, be less than or equal to 30% by volume and, in a typical example, less than or equal to 25% by volume. For example, the oxygen concentration may be higher than 0% by volume and preferably higher than or equal to 3% by volume. The mixture-ratio changer 81 may use a different configuration (e.g., fans) other than the dampers 811 and 812 to realize the change in the mixture ratio of the recirculating flue gas and the high-concentration oxygen gas (the same applies to the mixture-ratio changers 82 and 83).

It is preferable that the flow rate of the mixed gas (the gas for primary combustion) supplied from below the grates 331 to 333 into the incinerator 3 is approximately constant before and after the mixture-ratio changer 81 changes the mixture ratio of the recirculating flue gas and the high-concentration oxygen gas. The flow rate of the mixed gas can be said to be approximately constant if the flow rate of the mixed gas is maintained within the range of plus or minus 20% of the average value of the flow rate (e.g., the average value during the course of the day) before and after the change in the mixture ratio. Before and after the change in the mixture ratio, the flow rate of the mixed gas may be maintained preferably within the range of plus or minus 15% of the average value and more preferably within the range of plus or minus 10% of the average value. The same applies to the flow rate of the mixed gas before and after the mixture-ratio changers 82 and 83 change the mixture ratio.

**In** a second control example of the controller 10, a target value is set for the incinerator-outlet oxygen concentration serving as the amount of interest, and the mixture-ratio changer 82 provided in the second branch lines 52 and 62 is controlled so as to approximate the measured value of the incinerator-outlet oxygen concentration, obtained by the oxygen-concentration measuring part 37, to the target value. Specifically, when the measured value of the incinerator-outlet oxygen concentration is lower than the target value, the degree of opening of the damper 821 is reduced and the degree of opening of the damper 822 is increased in the mixture-ratio changer 82. This increases the ratio of the high-concentration oxygen gas in the mixed gas of the recirculating flue gas and the high-concentration oxygen gas and allows the gas for secondary combustion having a high oxygen concentration to be supplied from the nozzle 341 into the secondary combustion chamber 34. As a result, the measured value of the incinerator-outlet oxygen concentration becomes high.

When the measured value of the incinerator-outlet oxygen concentration is higher than the target value, the degree of opening of the damper 821 is increased and the degree of opening of the damper 822 is reduced in the mixture-ratio changer 82. This lowers the ratio of the high-concentration oxygen gas in the mixed gas and allows the gas for secondary combustion having a low oxygen concentration to be supplied from the nozzle 341 into the secondary combustion chamber 34. As a result, the measured value of the incinerator-outlet oxygen concentration becomes low. As described above, the mixture-ratio changer 82 changes the mixture ratio of the recirculating flue gas and the high-concentration oxygen gas in the mixed gas (i.e., the oxygen concentration in the gas for secondary combustion) so as to control the incinerator-outlet oxygen concentration to be approximately constant at the target value. As described previously, in the preferable mixture-ratio changer 82, the flow rate of the gas for secondary combustion supplied from the nozzle 341 into the incinerator 3 is approximately constant before and after the change in the mixture ratio of the recirculating flue gas and the high-concentration oxygen gas.

In a third control example of the controller 10, a target value is set for the temperature inside the primary combustion chamber 33 serving as the amount of interest, and the mixture-ratio changer 83 provided in the third branch lines 53 and 63 is controlled so as to approximate the measured value of the temperature inside the primary combustion chamber 33, obtained by the in-incinerator temperature measuring part 38, to the target value. Specifically, when the measured value of the temperature inside the primary combustion chamber 33 is lower than the target value, the degree of opening of the damper 831 is reduced and the degree of opening of the damper 832 is increased in the mixture-ratio changer 83. This increases the ratio of the high-concentration oxygen gas in the mixed gas of the recirculating flue gas and the high-concentration oxygen gas and allows the auxiliary gas having a high oxygen concentration to be supplied from the nozzle 336 into the primary combustion chamber 33. As a result, the measured value of the temperature inside the primary combustion chamber 33 becomes high.

When the measured value of the temperature inside the primary combustion chamber 33 is higher than the target value, the degree of opening of the damper 831 is increased and the degree of opening of the damper 832 is reduced in the mixture-ratio changer 83. This lowers the ratio of the high-concentration oxygen gas in the mixed gas and allows the auxiliary gas having a low oxygen concentration to be supplied from the nozzle 336 into the primary combustion chamber 33. As a result, the measured value of the temperature inside the primary combustion chamber 33 becomes low. As described above, the mixture-ratio changer 83 changes the mixture ratio of the recirculating flue gas and the high-concentration oxygen gas in mixed gas (i.e., the oxygen concentration in the auxiliary gas) so as to control the temperature inside the primary combustion chamber 33 to be approximately constant at the target value. As described previously, in the preferable mixture-ratio changer 83, the flow rate of the auxiliary gas supplied from the nozzle 336 into the incinerator 3 is approximately constant before and after the change in the mixture ratio of the recirculating flue gas and the high-concentration oxygen gas. Depending on the design of the garbage incineration plant 1, the nozzle 336 may not be provided in the primary combustion chamber 33. In this case, the third control example described above is not employed.

The in-incinerator temperature measuring part 38 may measure the temperature inside the secondary combustion chamber 34 by using a sensor provided in the secondary combustion chamber 34. In this case, in the controller 10, a target value is set for the temperature inside the secondary combustion chamber 34, and the mixture-ratio changers 82 and 83 are controlled so as to approximate the measured value of the temperature inside the secondary combustion chamber 34, obtained by the in-incinerator temperature measuring part 38, to the target value. Specifically, when the measured value of the temperature inside the secondary combustion chamber 34 is lower than the target value, the gas for secondary combustion having a high oxygen concentration is supplied from the nozzle 341 into the secondary combustion chamber 34, and the auxiliary gas having a high oxygen concentration is supplied from the nozzle 336 into the primary combustion chamber 33. As a result, the measure value of the temperature inside the secondary combustion chamber 34 becomes high.

When the measured value of the temperature inside the secondary combustion chamber 34 is higher than the target value, the gas for secondary combustion having a low oxygen concentration is supplied from the nozzle 341 into the secondary combustion chamber 34, and the auxiliary gas having a low oxygen concentration is supplied from the nozzle 336 into the primary combustion chamber 33. As a result, the measured value of the temperature inside the secondary combustion chamber 34 becomes low. As described above, the mixture-ratio changers 82 and 83 respectively change the oxygen concentration in the gas for secondary combustion and the oxygen concentration in the auxiliary gas so as to control the temperature inside the secondary combustion chamber 34 to be approximately constant at the target value. In the case where the nozzle 336 is not provided in the primary combustion chamber 33, the temperature inside the secondary combustion chamber 34 may be controlled by only changing the oxygen concentration in the gas for secondary combustion.

In the control of the amount of boiler-generated steam (first control example), the oxygen concentration in the gas for secondary combustion and/or the oxygen concentration in the auxiliary gas may also be changed, in addition to the oxygen concentration in the gas for primary combustion. In the control of the oxygen concentration at the outlet of the incinerator (second control example), the oxygen concentration in the gas for primary combustion and/or the oxygen concentration in the auxiliary gas may also be changed, in addition to the oxygen concentration in the gas for secondary combustion. In the control of the temperature inside the incinerator (third control example), the oxygen concentration in the gas for primary combustion may be changed.

Alternatively, two or more amounts of interest including the amount of boiler-generated steam, the incinerator-outlet oxygen concentration, and the temperature inside the incinerator may be focused on and controlled in parallel. In this case, if the target to be changed (the oxygen concentration in the gas for primary combustion, the oxygen concentration in the gas for secondary combustion, or the oxygen concentration in the auxiliary gas) is the same in the control of the two or more amounts of interest, for example, the amount of change in the target to be changed may be determined in consideration of weights assigned to the two or more amounts of interest.

As described thus far, the garbage incineration plant 1 includes the recirculating flue gas line 6 through which part of the flue gas flowing through the flue gas passage 4 is taken out as the recirculating flue gas and supplied into the incinerator 3, and the oxygen mixer 5 that mixes the recirculating flue gas flowing through the recirculating flue gas line 6 with the high-concentration oxygen gas having a higher oxygen concentration than air. By mixing the recirculating flue gas with the high-concentration oxygen gas and using the mixed gas as the gas for combustion in the incinerator 3, the garbage incineration plant 1 is capable of increasing the amount of the recirculating flue gas taken out from the flue gas passage 4 as compared with the case where the recirculating flue gas is mixed with air. As a result, it is possible to easily reduce the amount of flue gas that flows toward the downstream of the position of connection with the recirculating flue gas line 6 (i.e., the discharge position P1) in the flue gas passage 4.

In the garbage incineration plant 1, almost no air is supplied into the incinerator 3 from the outside, with the exception of, for example, the air introduced together with garbage into the incinerator 3 or the air flowing via the feed hopper 31 into the incinerator 3. To be more specific, almost all the gas for combustion supplied into the incinerator 3 through the gas pipe is the recirculating flue gas supplied from the recirculating flue gas line 6 into the incinerator 3, i.e., the recirculating flue gas mixed with the high-concentration oxygen gas. This considerably reduces the amount of flue gas discharged from the stack 47 in the garbage incineration plant 1. During the initial operation, air may be supplied from the outside into the incinerator 3.

Now, a garbage incineration plant according to a comparison example will be described in which gases that have constant oxygen concentrations (e.g., air) are supplied as the gas for primary combustion, the gas for secondary combustion, and the auxiliary gas. In the garbage incineration plant according to the comparison example, the flow rate of the gas for primary combustion, the gas for secondary combustion, or the auxiliary gas is increased or reduced so as to approximate the amount of interest to the target value, the amount of interest being the amount of boiler-generated steam, the incinerator-outlet oxygen concentration, or the temperature inside the incinerator. In this case, the amount of flue gas discharged from the incinerator 3 varies greatly, and accordingly the power consumption of the induced draft fan 46 increases.

In contrast, the garbage incineration plant 1 includes the mixture-ratio changers 81 to 83 that change the mixture ratio of the recirculating flue gas and the high-concentration oxygen gas that are supplied into the incinerator 3 from a predetermined gas supply position in the incinerator 3. Then, the amount-of-interest measuring part (the amount-of-steam measuring part 36, the oxygen-concentration measuring part 37, and the in-incinerator temperature measuring part 38 in the above description) measures, as the amount of interest, at least one of the amount of steam produced by heat of the flue gas, the temperature inside the incinerator 3, and the oxygen concentration at the outlet of the incinerator 3, and the controller 10 controls the mixture-ratio changers 81 to 83 so as to approximate the measured value of the amount of interest to a predetermined target value. In this way, variations in the amount of flue gas discharged from the incinerator 3 can be reduced by changing the oxygen concentration in the mixed gas supplied from the aforementioned gas supply position into the incinerator 3. As a result, it is possible to easily approximate the amount of interest to the target value while reducing the power consumption of the induced draft fan 46.

Preferably, the flow rate of the mixed gas supplied from the aforementioned gas supply position into the incinerator 3 may be approximately constant. This further reduces variations in the amount of flue gas discharged from the incinerator 3 and further reduces the power consumption of the induced draft fan 46. Besides, the pressure inside the incinerator 3 becomes approximately constant, and accordingly stable and safety operation becomes possible. Depending on conditions or the like for garbage incineration, the mixture ratio of the recirculating flue gas and the high-concentration oxygen gas may be changed with a change in the flow rate of the mixed gas.

Preferably, the amount of interest may include the aforementioned amount of steam, and the gas supply position in the incinerator 3 may be located below the grates 331 to 333. This allows the amount of steam to easily approach the target value. Even in the case where low-calorie garbage is supplied into the incinerator 3, it is possible to incinerate the low-calorie garbage appropriately by increasing the oxygen concentration in the gas for primary combustion. In other words, there is no need to use auxiliary fuel such as fossil fuel for the combustion of the low-calorie garbage and therefore it is possible to reduce running costs. Besides, it is possible to maintain a high combustion temperature during such low-load operation and to flexibly cope with waste such as low-calorie garbage, flood-damaged garbage, or sludge. Alternatively, in the case where low-calorie garbage is supplied into the incinerator 3, the low-calorie garbage may be burnt efficiently by lowering the flow rate of the gas for primary combustion while increasing the oxygen concentration in the gas for primary combustion.

Preferably, the amount of interest may include the oxygen concentration at the outlet of the incinerator 3, and the gas supply position in the incinerator 3 may be provided in the side wall portion of the incinerator 3 that surrounds the secondary combustion chamber 34. This allows the oxygen concentration at the outlet of the incinerator 3 to easily approach the target value.

Meanwhile, if, as in the garbage incineration plant according to the above-described comparison example, the oxygen concentration at the outlet of the incinerator 3 is high in the case of increasing or reducing the flow rate of the gas for secondary combustion (air for secondary combustion), the flow rate of the air for secondary combustion becomes low. In this case, due to a reduction in the speed of issuing the air for secondary combustion from the nozzle, penetration of the air for secondary combustion becomes low and agitation in the secondary combustion chamber 34 becomes insufficient. As a result, incomplete combustion is likely to occur and carbon monoxide (CO) is likely to be produced. In contrast, in the garbage incineration plant 1, the gas for secondary combustion having a low oxygen concentration is supplied when the oxygen concentration at the outlet of the incinerator 3 is high. This maintains constant penetration and allows sufficient agitation in the secondary combustion chamber 34, thereby reducing the occurrence of incomplete combustion. Besides, NOx can also be reduced approximately.

Preferably, the amount of interest may include the temperature inside the incinerator 3, and the gas supply position in the incinerator 3 may be provided at the ceiling portion 335 that covers part of the grates 331 to 333, the side wall portion that surrounds the primary combustion chamber 33 of the incinerator 3, or the side wall portion that surrounds the secondary combustion chamber 34 of the incinerator 3. This allows the temperature inside the incinerator 3 to easily approach the target value and stabilizes the operation of the garbage incineration plant 1. If, as in the garbage incineration plant according to the comparison example described above, the flow rate of the gas for secondary combustion or the auxiliary gas is increased or reduced and becomes excessively low, incomplete combustion is likely to occur and carbon monoxide is likely to be produced. In contrast, in the garbage incineration plant 1 that changes the oxygen concentration in the gas for secondary combustion or in the auxiliary gas, it is possible to reduce the occurrence of incomplete combustion as described above.

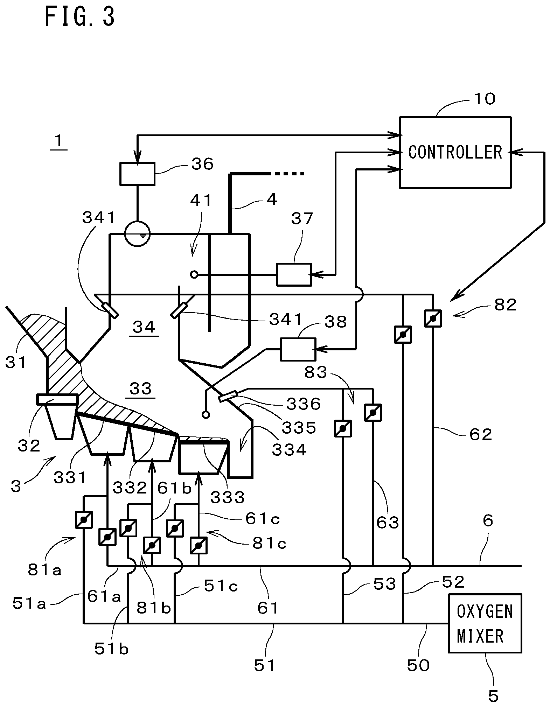

Fig. 3 is a diagram showing another example of the configuration for supplying the gas for primary combustion to the grates 331 to 333. In Fig. 3, the first branch line 61 of the recirculating flue gas line 6 branches off into the plurality of lines 61a, 61b, and 61c that are connected respectively to the wind boxes of the dry grate 331, the combustion grate 332, and the post-combustion grate 333. The first branch line 51 of the oxygen gas mixture line 50 also branches off into the plurality of lines 51a, 51b, and 51c that are connected respectively to the plurality of lines 61a, 61b, and 61c described above. The lines 51a and 61a are provided with the dampers of the mixture-ratio changer 81a, so that it is possible to change the mixture ratio of the recirculating flue gas and the high-concentration oxygen gas that are supplied from below the dry grate 331 into the incinerator 3. The lines 51b and 61b are provided with the dampers of the mixture-ratio changer 81b, so that it is possible to change the mixture ratio of the recirculating flue gas and the high-concentration oxygen gas that are supplied from below the combustion grate 332 into the incinerator 3. The lines 51c and 61c are provided with the dampers of the mixture-ratio changer 81c, so that it is possible to change the mixture ratio of the recirculating flue gas and the high-concentration oxygen gas that are supplied from below the post-combustion grate 333 into the incinerator 3.

In the example shown in Fig. 3, the controller 10 also individually controls the mixture-ratio changer 81a to 81c so as to approximate the measured value of the amount of interest (e.g., the amount of boiler-generated steam) to a predetermined target value. Accordingly, it is possible to accurately approximate the amount of interest to the target value. Preferably, the flow rate of the gas supplied from below each of the grates 331 to 333 into the incinerator 3 may be approximately constant. This reduces variations in the amount of flue gas discharged from the incinerator 3 and reduces the power consumption of the induced draft fan 46. Alternatively, like the grates 331 to 333, a plurality of mixture-ratio changers may be provided respectively for the plurality of nozzles 341 in the secondary combustion chamber 34 so as to make it possible to individually change the mixture ratio of the recirculating flue gas and the high-concentration oxygen gas that are supplied from each nozzle 341 into the incinerator 3. The same applies to the case where the primary combustion chamber 33 includes a plurality of nozzles 336.

### Second Embodiment

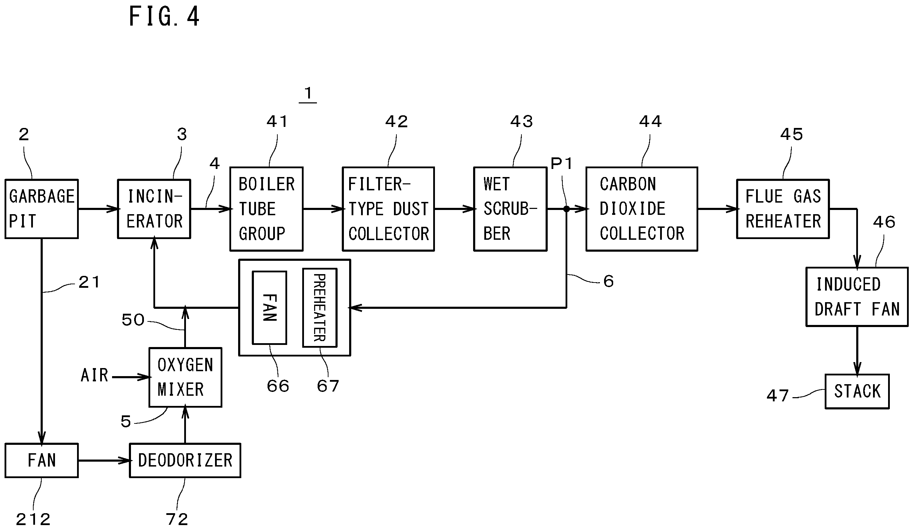

Fig. 4 is a block diagram showing a garbage incineration plant 1 according to a second embodiment of the present invention. In the garbage incineration plant 1 shown in Fig. 4, the garbage pit 2 and the oxygen mixer 5 are connected by a drawn-off gas line 21 serving as a gas passage. The gas in the garbage pit 2 is drawn off as a drawn-off gas and supplied through the drawn-off gas line 21 to the oxygen mixer 5. The other configuration is similar to the configuration of the garbage incineration plant 1 shown in Fig. 1, and identical constituent elements are given the same reference signs.

The drawn-off gas line 21 is provided with a fan 212 and a deodorizer 72 arranged in this order from the garbage pit 2 toward the oxygen mixer 5. The order of the fan 212 and the deodorizer 72 may be reversed. The oxygen mixer 5 receives the supply of the drawn-off gas deodorized by an activated carbon layer or the like of the deodorizer 72 and generates a high-concentration oxygen gas by concentrating oxygen from the drawn-off gas. The high-concentration oxygen gas is mixed through the oxygen gas mixture line 50 with the recirculating flue gas flowing through the recirculating flue gas line 6 and is supplied into the incinerator 3. A gas that remains after oxygen concentration in the oxygen mixer 5 (mainly, a nitrogen gas) is discharged to the outside of the garbage incineration plant 1. The oxygen mixer 5 may take surrounding air therein as necessary, for example, in cases such as where it is not possible to generate a necessary amount of high-concentration oxygen gas from only the drawn-off gas.

As described above, the oxygen mixer 5 shown in Fig. 4 is provided with the drawn-off gas line 21 through which the gas in the garbage pit 2 is drawn off as the drawn-off gas, and thereby appropriately maintains negative pressure in the garbage pit 2. This reduces leakage of odor inside the garbage pit 2 to the outside. Moreover, the high-concentration oxygen gas is generated from the drawn-off gas and mixed with the recirculating flue gas so as to be used as the gas for combustion in the incinerator 3. This increases the amount of recirculating flue gas taken out from the flue gas passage 4 and reduces the amount of flue gas discharged from the stack 47.

Furthermore, since almost all the gas for combustion supplied through the gas pipe into the incinerator 3 is achieved with the recirculating flue gas mixed with the high-concentration oxygen gas, it is possible to considerably reduce the amount of flue gas discharged from the stack 47. Besides, the controller 10 controls the mixture-ratio changers 81 to 83 so as to approximate the measured value of the amount of interest to a predetermined target value (see Fig. 2). This reduces variations in the amount of flue gas discharged from the incinerator 3 and, as a result, makes it possible to easily approximate the amount of interest to the target value while reducing the power consumption of the induced draft fan 46. The same applies to garbage incineration plants 1 according to third and fourth embodiments which will be described later.

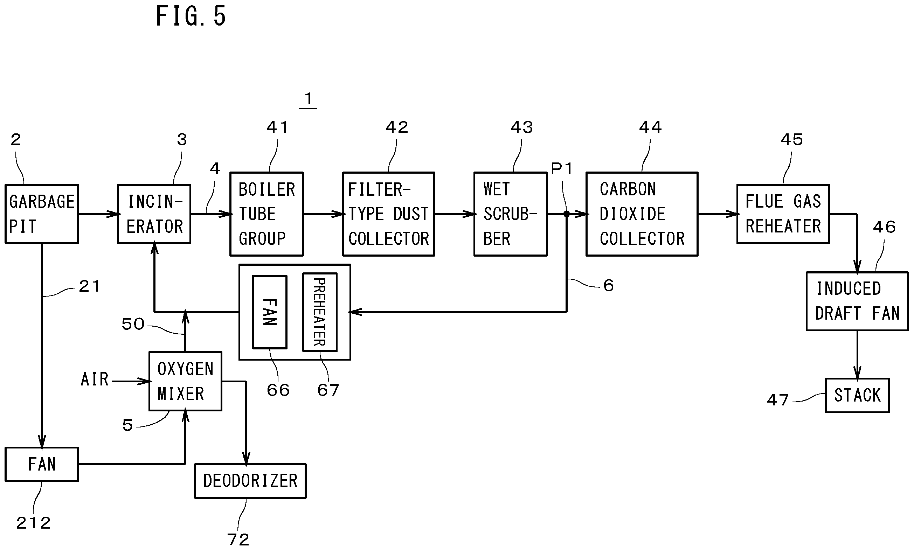

The deodorizer 72 does not necessarily have to be provided in the drawn-off gas line 21, and may be provided in an exhaust passage that extends from the oxygen mixer 5 toward the outside as shown in Fig. 5. The oxygen mixer 5 shown in Fig. 5 concentrates oxygen contained in the drawn-off gas (and air) to generate a high-concentration oxygen gas, and mixes the high-concentration oxygen gas with the recirculating flue gas. Meanwhile, the gas remaining from the drawn-off gas, i.e., the gas remaining after oxygen concentration, is discharged to the outside via the deodorizer 72. In the configuration shown in Fig. 5, the flow rate of the gas flowing through the deodorizer 72 is lower than the flow rate in the configuration shown in Fig. 4. This allows use of the small-sized deodorizer 72 and reduces the manufacturing cost of the garbage incineration plant 1.

### Third Embodiment

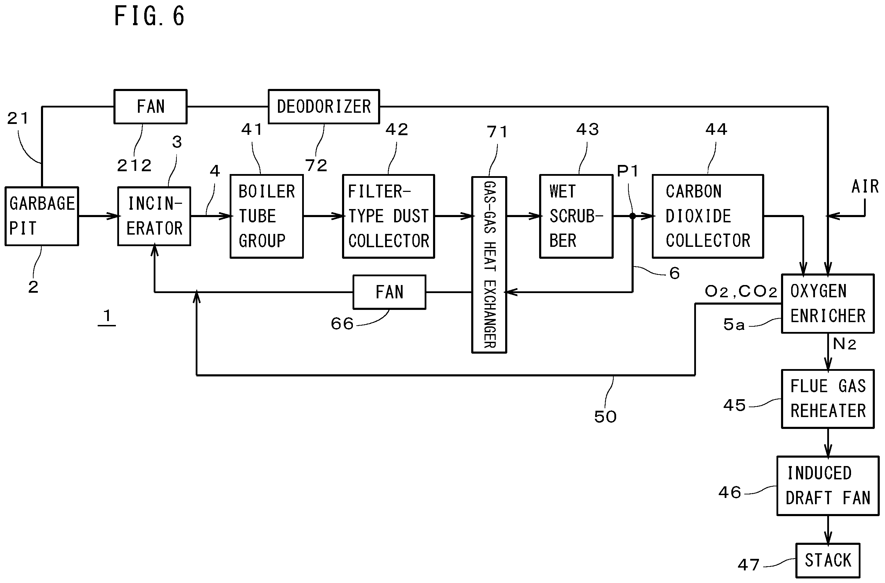

Fig. 6 is a block diagram showing a garbage incineration plant 1 according to a third embodiment of the present invention. The garbage incineration plant 1 shown in Fig. 6 includes an oxygen enricher 5a, instead of the oxygen mixer 5 of the garbage incineration plant 1 shown in Fig. 1. The oxygen enricher 5a is arranged between the carbon dioxide collector 44 and the flue gas reheater 45 in the flue gas passage 4. The oxygen enricher 5a is connected to the recirculating flue gas line 6 through the oxygen gas mixture line 50. The oxygen enricher 5a is further connected to the drawn-off gas line 21. The flue gas passage 4 and the recirculating flue gas line 6 are provided with a gas-gas heat exchanger 71. The other configuration is similar to the configuration shown in Fig. 1, and identical constituent elements are given the same reference signs.

The gas-gas heat exchanger 71 exchanges heat between the flue gas flowing through the flue gas passage 4 from the dust collector 42 toward the wet scrubber 43 and the recirculating flue gas flowing through the recirculating flue gas line 6. Accordingly, it is possible to efficiently heat the recirculating flue gas whose temperature has dropped in the wet scrubber 43 in the garbage incineration plant 1 in which the discharge position P1 is located downstream of the wet scrubber 43. The gas-gas heat exchanger 71 may also be used in the other garbage incineration plants 1. In the example shown in Fig. 6, a preheater is omitted from the recirculating flue gas line 6, but a preheater may be provided as necessary. Alternatively, a preheater may be provided, instead of the gas-gas heat exchanger 71. In the case where the gas-gas heat exchanger 71 is not provided, the discharge position P1 may be located between the dust collector 42 and the wet scrubber 43.

The flue gas that has passed through the carbon dioxide collector 44 is supplied to the oxygen enricher 5a shown in Fig. 6. In the drawn-off gas line 21, the drawn-off gas is drawn off from the garbage pit 2 by the fan 212 and supplied to the oxygen enricher 5a via the deodorizer 72. When necessary, air may be supplied from the outside into the oxygen enricher 5a. The oxygen enricher 5a is a device that generates a high-concentration oxygen gas having a high oxygen concentration from the aforementioned gases and may, for example, be a PSA device similar to the oxygen mixer 5 described above. In the present embodiment, the oxygen enricher 5a adsorbs and separates a nitrogen (N₂) gas from the aforementioned gases and guides the nitrogen gas to the flue gas reheater 45. The oxygen enricher 5a also guides the remaining gas (mainly an oxygen (O₂) gas and a carbon dioxide (CO₂) gas) to the recirculating flue gas line 6 through the oxygen gas mixture line 50 and mixes the remaining gas with the recirculating flue gas. The gas mixed with the recirculating flue gas serves as the high-concentration oxygen gas having a higher oxygen concentration than air and is used as the gas for combustion (oxidizer for combustion) in the incinerator 3. The gas guided to the flue gas reheater 45 (mainly, a nitrogen gas) is guided via the induced draft fan 46 to the stack 47 and released to the atmosphere. Alternatively, the oxygen enricher 5a may use an adsorbent that adsorbs oxygen. The same applies to the oxygen mixer 5 described above.

As described above, in the garbage incineration plant 1 shown in Fig. 6, the oxygen enricher 5a is provided in the flue gas passage 4. The oxygen enricher 5a serves as an oxygen mixer that generates a high-concentration oxygen gas having a high oxygen concentration from, for example, the flue gas that has passed through the carbon dioxide collector 44 or the drawn-off gas received from the garbage pit 2, and then mixes the high-concentration oxygen gas together with remaining carbon dioxide with the recirculating flue gas flowing through the recirculating flue gas line 6. This reduces the amount of carbon dioxide that is to be discharged and that is contained in the flue gas that has passed through the carbon dioxide collector 44.

Moreover, the drawn-off gas line 21 through which the gas inside the garbage pit 2 is drawn off as the drawn-off gas is provided so as to appropriately maintain negative pressure in the garbage pit 2. Then, the oxygen enricher 5a generates a high-concentration oxygen gas from the drawn-off gas and mixes the high-concentration oxygen gas with the recirculating flue gas flowing through the recirculating flue gas line 6. Accordingly, it is possible to increase the amount of recirculating flue gas to be taken out from the flue gas passage 4 as compared with cases such as where the drawn-off gas is mixed as-is with the recirculating flue gas or where the drawn-off gas is supplied as-is into the incinerator 3.

The garbage incineration plant 1 includes the wet scrubber 43 provided in the flue gas passage 4 between the dust collector 42 and the discharge position P1 of the recirculating flue gas. The gas-gas heat exchanger 71 heats the recirculating flue gas by exchanging heat between the flue gas that flows upstream of the wet scrubber 43 through the flue gas passage 4 and the recirculating flue gas that flows through the recirculating flue gas line 6. In this way, the temperature of the recirculating flue gas can be increased efficiently by heating the recirculating flue gas taken out from part of the flue gas (i.e., the gas having a lower flow rate than the flue gas in the flue gas passage 4) with the high-temperature flue gas flowing through the flue gas passage 4.

In the garbage incineration plant 1 shown in Fig. 6, depending on, for example, the oxygen content in the flue gas that has passed through the carbon dioxide collector 44, the flue gas may not be supplied to the oxygen enricher 5a. In this case, the oxygen enricher 5a takes out the high-concentration oxygen gas from the drawn-off gas discharged from the garbage pit 2 and the outside air to mix the high-concentration oxygen gas with the recirculating flue gas. Meanwhile, the gas (mainly, the nitrogen gas) other than the high-concentration oxygen gas is discharged to the flue gas reheater 45. The flue gas that has passed through the carbon dioxide collector 44 may, for example, be guided to the downstream side of the oxygen enricher 5a without passing through the oxygen enricher 5a and then mixed with the gas (e.g., the nitrogen gas) discharged from the oxygen enricher 5a.

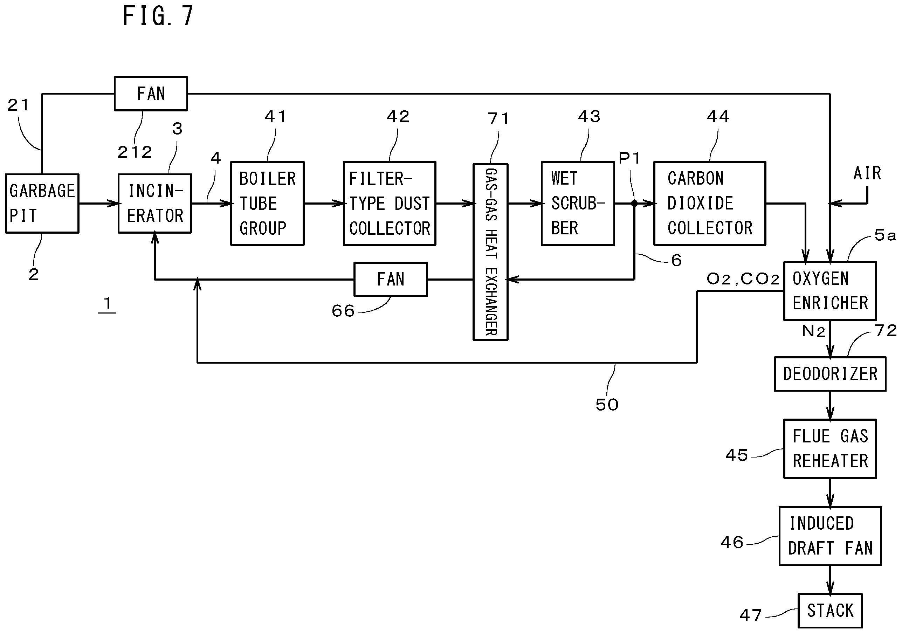

As shown in Fig. 7, the deodorizer 72 may be arranged between the oxygen enricher 5a and the flue gas reheater 45. In this case, the gas remaining after oxygen concentration in the oxygen enricher 5a passes through the deodorizer 72 and is then discharged to the outside from the stack 47. Alternatively, the flue gas that has passed through the carbon dioxide collector 44 may be guided to the downstream side of the deodorizer 72 without passing through the oxygen enricher 5a and the deodorizer 72 and may be mixed with the gas discharged from the deodorizer 72 (e.g., the nitrogen gas). Depending on the configuration of the garbage incineration plant 1, the deodorizer 72 may be omitted. As another alternative, the drawn-off gas may not be supplied to the oxygen enricher 5a.

### Fourth Embodiment

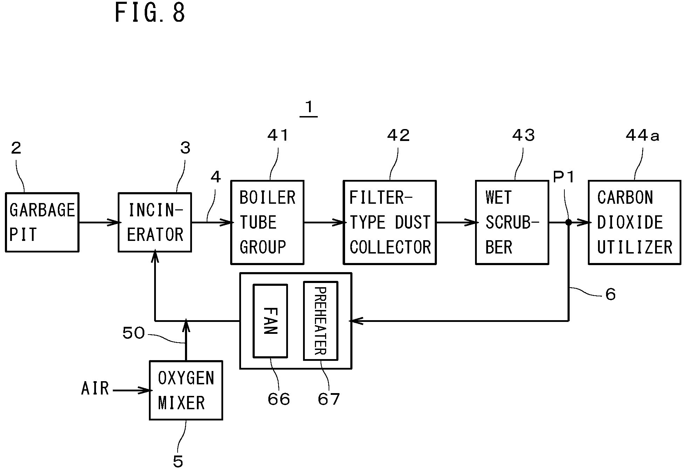

Fig. 8 is a block diagram showing a garbage incineration plant 1 according to a fourth embodiment of the present invention. The garbage incineration plant 1 shown in Fig. 8 includes a carbon dioxide utilizer 44a, instead of the carbon dioxide collector 44 of the garbage incineration plant 1 shown in Fig. 1, and omits the flue gas reheater 45, the induced draft fan 46, and the stack 47. The other configuration is similar to the configuration of the garbage incineration plant 1 shown in Fig. 1.

As shown in Fig. 8, the carbon dioxide utilizer 44a is provided downstream of the discharge position P1 in the flue gas passage 4. The carbon dioxide utilizer 44a is a device that generates a predetermined product by using a flue gas. In one example, the carbon dioxide utilizer 44a generates a methane gas or the like from the flue gas by methanation. In another example, a solid carbonate is generated from the flue gas by mineralization. Note that the product may also contain components other than carbon dioxide contained in the flue gas. The garbage incineration plant 1 including the carbon dioxide utilizer 44a is capable of considerably reducing the discharge of the flue gas to the atmosphere. As in Fig. 8, the other garbage incineration plants 1 may also include the carbon dioxide utilizer 44a, instead of the carbon dioxide collector 44. Alternatively, the garbage incineration plants 1 may include both of the carbon dioxide collector 44 and the carbon dioxide utilizer 44a. In this case, for example, the carbon dioxide utilizer 44a generates a predetermined product by using carbon dioxide collected by the carbon dioxide collector 44.

The garbage incineration plants 1 described above may be modified in various ways.

In the above-described embodiments, almost no air is supplied into the incinerator 3 from the outside, but depending on the design of the garbage incineration plant 1, air may be supplied, as part of the gas for combustion (the oxygen-containing gas), into the incinerator 3 through the gas pipe. In this case, in order to sufficiently reduce the amount of flue gas, it is preferable that the main gas of the gas for combustion supplied into the incinerator 3 through the gas pipe is the recirculating flue gas mixed with the high-concentration oxygen gas. For example, the main gas of the gas for combustion may be a gas that is 50% by volume or more of the gas for combustion. In this way, even if air is supplied as part of the gas for combustion into the incinerator 3 through the gas pipe, it is preferable that the air is less than 50% by volume of the gas for combustion. More preferably, the air may be less than 35% by volume and more preferably less than 20% by volume of the gas for combustion.

In the above-described embodiments, the recirculating flue gas line 6 is connected to the primary combustion chamber 33 and the secondary combustion chamber 34 of the incinerator 3, and the recirculating flue gas mixed with the high-concentration oxygen gas is used as the gas for primary combustion and the gas for secondary combustion. Alternatively, the recirculating flue gas line 6 may be connected to only one of the primary combustion chamber 33 and the secondary combustion chamber 34.

In the case where the flue gas that has passed through the carbon dioxide collector 44 has an oxygen concentration that is sufficiently higher than air, the flue gas may be mixed as a high-concentration oxygen gas with the recirculating flue gas. In this case, the carbon dioxide collector 44 is regarded as an oxygen mixer.

The incinerator 3 may be other than a stoker-type incinerator (e.g., a fluidized bed furnace or a kiln furnace). The garbage incineration plant 1 may be utilized as a waste incineration plant for incinerating industrial wastes or non-industrial wastes other than garbage.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: garbage incineration plant
- 2: garbage pit
- 3: incinerator
- 4: flue gas passage
- 5: oxygen mixer
- 5a: oxygen enricher
- 6: recirculating flue gas line
- 10: controller
- 21: drawn-off gas line
- 33: primary combustion chamber
- 34: secondary combustion chamber
- 36: amount-of-steam measuring part
- 37: oxygen-concentration measuring part
- 38: in-incinerator temperature measuring part
- 42: dust collector
- 44: carbon dioxide collector
- 81 to 83, 81a to 81c: mixture-ratio changer
- 331 to 333: grate
- 335: ceiling portion
- 336, 341: nozzle
- P1: discharge position

## Claims

1. A waste incineration plant comprising:
an incinerator that incinerates waste;
a flue gas passage through which a flue gas discharged from said incinerator flows;
a dust collector provided in said flue gas passage;
a recirculating flue gas line that is connected to a discharge position located downstream of said dust collector in said flue gas passage and that takes out, as a recirculating flue gas, part of said flue gas flowing through said flue gas passage to supply the recirculating flue gas into said incinerator;
an oxygen mixer that mixes said recirculating flue gas flowing through said recirculating flue gas line with a high-concentration oxygen gas that has a higher oxygen concentration than air;
a mixture-ratio changer that changes a mixture ratio of said recirculating flue gas and said high-concentration oxygen gas that are supplied into said incinerator from a predetermined gas supply position in said incinerator;
an amount-of-interest measuring part that measures, as an amount of interest, at least one of an amount of steam produced by heat of said flue gas, a temperature inside said incinerator, or an oxygen concentration at an outlet of said incinerator; and
a controller that controls said mixture-ratio changer to approximate a measured value of said amount of interest to a predetermined target value,
wherein a main gas of a gas for combustion supplied into said incinerator through a gas pipe is said recirculating flue gas mixed with said high-concentration oxygen gas.

2. The waste incineration plant according to claim 1, further comprising:
a waste pit that reserves waste before disposal into said incinerator; and
a drawn-off gas line through which a gas in said waste pit is drawn off as a drawn-off gas,
wherein said oxygen mixer generates said high-concentration oxygen gas from said drawn-off gas and mixes said high-concentration oxygen gas with said recirculating flue gas flowing through said recirculating flue gas line.

3. The waste incineration plant according to claim 1, further comprising:
a carbon dioxide collector that is provided downstream of said discharge position in said flue gas passage and that collects carbon dioxide from said flue gas,
wherein said oxygen mixer generates said high-concentration oxygen gas from said flue gas that has passed through said carbon dioxide collector and mixes said high-concentration oxygen gas with said recirculating flue gas flowing through said recirculating flue gas line.

4. The waste incineration plant according to claim 1, wherein
a flow rate of the gas supplied into said incinerator from said gas supply position in said incinerator is approximately constant.

5. The waste incineration plant according to any one of claims 1 to 4, wherein
said amount of interest includes said amount of steam, and
said gas supply position in said incinerator is located below a grate.

6. The waste incineration plant according to any one of claims 1 to 4, wherein
said amount of interest includes the temperature inside said incinerator, and
said gas supply position in said incinerator is located at a ceiling portion that covers part of a grate, a side wall portion that surrounds a primary combustion chamber of said incinerator, or a side wall portion that surrounds a secondary combustion chamber of said incinerator.

7. The waste incineration plant according to any one of claims 1 to 4, wherein
said amount of interest includes the oxygen concentration at the outlet of said incinerator, and
said gas supply position in said incinerator is located at a side wall portion that surrounds a secondary combustion chamber of said incinerator.
